Europäisches Patentamt

European Patent Office

Office européen des brevets

(19)

(11) Veröffentlichungsnummer : **0 486 614 B1**

# (12) EUROPÄISCHE PATENTSCHRIFT

(45) Veröffentlichungstag der Patentschrift :
19.10.94 Patentblatt 94/42

(51) Int. Cl.⁵ : **G11B 23/087**

(21) Anmeldenummer : 90913384.5

(22) Anmeldetag : 10.08.90

(86) Internationale Anmeldenummer :
PCT/EP90/01317

(87) Internationale Veröffentlichungsnummer :
WO 91/03052 07.03.91 Gazette 91/06

(54) BANDKASSETTE,INSBESONDERE MAGNETBANDKASSETTE.

(30) Priorität : 12.08.89 DE 8909706 U

(43) Veröffentlichungstag der Anmeldung :
27.05.92 Patentblatt 92/22

(45) Bekanntmachung des Hinweises auf die
Patenterteilung :
19.10.94 Patentblatt 94/42

(84) Benannte Vertragsstaaten :
AT BE CH DE DK ES FR GB IT LI LU NL SE

(56) Entgegenhaltungen :
EP-A- 0 150 406
EP-A- 0 277 301
DE-A- 2 716 725
DE-A- 2 936 860
DE-B- 2 501 914
GB-A- 2 212 783

(73) Patentinhaber : BASF Aktiengesellschaft
Carl-Bosch-Strasse 38
D-67063 Ludwigshafen (DE)

(72) Erfinder : SCHOETTLE, Klaus
Bergstrasse 115
D-6900 Heidelberg (DE)
Erfinder : MANZKE, Klaus
Schulstrasse 10
D-6721 Westheim (DE)
Erfinder : SCHMIDTS, Kurt
Oberer Graben 1
D-7635 Schwanau (DE)
Erfinder : HUCK, Arno
Hornisgrindestrasse 24a
D-7597 Rheinau (DE)
Erfinder : EBERHARD, Joachim
Freiherr-von-Grechtler-Strasse 37
D-7634 Kippenheim (DE)

## Beschreibung

Die Anmeldung betrifft eine Bandkassette, insbesondere Magnetbandkassette, mit mindestens einem Bandwickel auf einem im wesentlichen flanschlosen Wickelkern, auf den und/oder von dem ein Band auf- bzw. abwickelbar ist in einem Kassettengehäuse, wobei zwischen dem Bandwindungen aufweisenden Bandwickel und den Boden- und Deckelwänden der Kassette Folien mit gebogenen oder geknickten, einander zugeordneten und in Bezug auf die Kassettenmittelebene einander gegenüberliegenden Folienbereichen vorgesehen sind, die zumindest zeitweise mit den Wickelkernen, den Bandwickeln und dem Band in Kontakt treten können, und die Ablaufabschnitte umfassen, die jede der aufzuwickelnden Bandwindungen zum Wickelkern neu ausrichten und führen, und wobei zwischen Wickelkernen und Kassettengehäuse eine axiale Lagereinengung vorgesehen ist und die Folien über die Lagereinengung reichen. Eine solche Bandkassette ist aus GB-A- 2 212 783 bekannt.

Mit dem DE-GM 86 06 119 ist eine Bandkassette bekannt, dessen Gehäuse im Bereich außerhalb der Wickelkerne mit Ringwülsten versehen ist. Obwohl ebenfalls geknickte Folien verwandt werden, erfolgt schon bei kleinen Bandwickelstörungen (Unebenheiten) ein Verklemmen und damit ist ein Kassettenbetrieb nicht mehr möglich.

Mit der Kassette gemäß DE-AS 23 27 828 ist für die Bandwickel dadurch eine gewisse axiale Lagerelastizität erreichbar, daß über die normale Stirnfläche der Wickelkerne hervorragende Innenringe auf elastischen, über entsprechenden Gehäusehohlräumen liegende Folienteilen abstützt sind. Dabei erfährt der Bandwickel selbst jedoch praktisch keine Führung, so daß Bandwickel- und Laufstörungen nicht vermieden werden.

Im DE-GM 72 21 230 werden darüber hinaus als Lagermittel für Wickelkerne in Magnetbandkassetten einander gegenüberliegende Lagerfolien mit Kreisringprägungen beschrieben, die koaxial über den Wickelkernen angeordnet sind, zur Bandwickel- und Bandführung jedoch im wesentlichen nichts beitragen können.

In der DE-PS 28 25 457 sind schlieplich zwei der oben erwähnten Möglichkeiten, die Verwendung eines erhöhten Lagerrandes am Wickelkern und von in die Ringnut in üblichen Wickelkernen eingreifenden Folienlängsprägungen in Verbindung mit außerhalb des Wickelkerndurchmessers an den Gehäusewänden abgestützten Folienbereichen zusammengefaßt worden. Nachteilig ist dabei die an üblichen Wickelkernen vorhandene Bandklammer, die zu Unregelmäßigkeiten beim Drehen des Wickelkerns führt, der durch den Lagerrand und die Folienprägungen ja gerade besser geführt werden sollte.

Die Dimensionierung der Wickelkerne und Folienprägungen ist schwierig, wenn ein Verklemmen der Bandwickel in allen Betriebszuständen vermieden werden soll. Daran ist auch dadurch wenig zu ändern, daß zwischen den Prägungen der Folie ein konvex zu den Gehäuseinnenwänden ausgebildeter relativ breiter Folienmittelteil vorgesehen ist, der eine zusätzliche elastische Abstützung der Wickelkerne erzielen soll. Derartige breite Folienmittelteil Verformungen sind auch hier sehr stabil, sind nicht wiederholbar in großen Mengen genau herstellbar, werden durch thermoplastisches Fließen oder Schrumpfen zum Verschwinden gebracht oder verlieren ihre Wölbung durch Anhaften aufgrund elastischer Aufladung an den Gehäusewänden und damit ihre Wirksamkeit. Stufenförmige und anders ungleichmäpig aufgewickelte Bandwickel können sich somit dennoch ausbilden und zu den bekannten Kassetten-Betriebsstörungen führen.

Es ist Aufgabe der vorliegenden Erfindung, den Wickelkern, den Bandwickel und das Band besser zu halten, auszurichten und zu führen und dafür geeignete Bandkassetten bzw. geeignete Beilagefolien für derartige Bandkassetten bereitzustellen.

Die Aufgabe wird mit der im Anspruch 1 angegebenen Bandkassette gelöst.

Damit wird vorteilhafterweise erreicht, daß die gebogenen oder geknickten Folienbereiche außerhalb des Außendurchmessers der Bandwickel bleiben, und so in einer Linienberührung sowohl auf die Ring- und Außenkanten der Wickelkerne als auch auf die aufzuwickelnden Bandwindungen zur gleichmäßigen Ausbildung der Bandwickel wirken können.

In Verbindung mit dem jeweiligen Ringrand am Kassettengehäuse wird die Führungswirkung der gebogenen oder geknickten Folienbereiche in unmittelbarer Nähe des Wickelkerns für das Band und den Bandwickel verstärkt, so daß ein Kippen und Taumeln der Wickelkerne in jedem Betriebszustand weitgehend ausgeschlossen ist, ohne daß sie dadurch andere Betriebsstörungen, etwa durch eine hervorstehende Bandklammer, verstärkt auswirken.

Besonders von außen auf die Kassette wirkende mechanische Störungen (Stöße, Schläge) aber auch Bandungleichmäßigkeiten (ungleiche Banddicke über die Bandbreite gesehen) werden durch die erfindungsgemäße Kasettenausbildung stark gedämpft, so daß sich in allen Betriebslagen eine zuverlässigere funktionssicherere Kassette ergibt.

Um den Wickelkern bzw. die Wickelkerne unproblematisch mit den gebogenen oder geknickten Folienbereichen abzustützen, können entweder in Längs oder Querrichtung der Kassette Prägungen oder Knicke in den Folien vorgesehen sein, es können jedoch auch Ringprägungen verwendet werden.

Bezüglich der Form der gebogenen, geknickten oder geprägten Folienbereiche sind Dreiecks-, Trapez-, Kreisabschnitts- oder andere Bogenformen zu benutzen. In der Höhe zum Wickelkern sind diese Folienbereiche derartig ausgebildet und angeordnet, daß eine Linienführung der Ringkanten des jeweiligen Wickelkerns und für das ankommende Band gewährleistet ist. Dabei sind die einander zugeordneten, gebogenen oder geknickten Folienbereiche in einem Abstand voneinander angeordnet, der im wesentlichen etwa der Bandbreite entspricht.

Es ist zweckmäßig, wenn die Querschnittsform der Prägungen oder Knicke etwa symmetrisch ist, daß die Symmetrielinie vom Mittelpunkt des Wickelkerns einen Abstand aufweist, der größer ist, als der Radius des Wickelkerns. Damit wird sichergestellt, daß Wickelkern und ankommende Bandwindungen gleichen Anlauf-, Ausricht- und Führungsgegebenheiten unterworfen sind, und nicht etwa nur der Wickelkern (wie gemäß DE-PS 28 45 457) geführt wird.

Vorteilhaft wird bei auf den Ringrändern aufliegenden Folien deren Höhe und die Ausbildung und Anordnung der gebogenen und geknickten Folienbereiche so gewählt, daß diese bei vollem Bandwickel im Bereich des Wickelkerndurchmessers nicht an der Innenseite der Kassettenwand zur Anlage kommen. Damit wird erreicht, daß im Bereich des Außendurchmessers eine Federwirkung auf Wickelkern und Bandwickel ständig ausgeübt wird, sowohl im Hinblick auf Kipp- und Taumelbewegungen, als auch hinsichtlich auftretender Stoß- und Schlagwirkungen.

Es ist weiterhin vorteilhaft, wenn das axiale Spiel zwischen Wickelkern und Ringrändern aus Gehäuse im Vergleich zum axialen Spiel zwischen Bandwickel und Gehäuseinnenwand im Bereich eines Faktors von etwa 0,3 bis etwa 0,7, vorzugsweise bei etwa 0,5, liegt.

In vorteilhafter Variante der Erfindung sind zusätzlich zu den gebogenen oder geknickten Folienbereichen, die auperhalb des Durchmessers des Wickelkerns liegen, innerhalb des Durchmessers gebogene oder geknickte Folienbereiche vorgesehen, die zur Innenfläche des Gehäuses gerichtet sind.

Dadurch wird durch die zusätzliche Abstützung innerhalb des Wickelkernbereichs eine Vergrößerung der am Außenrand wirksamen Federdruckkräfte ermöglicht.

Besagte zusätzliche innere gebogene oder geknickte Folienbereiche können zusammen mit den äußeren Folienbereichen etwa eine Sinusform oder zwei nebeneinander angeordnete Kreis- oder Kurvenbögenformen im Querschnitt besitzen. Praktisch soll die Breite der Ringränder wesentlich kleiner als die gesamte Ringbreite des Wickelkerns sein, damit ein gewisser Winkelbereich zur Federabstützung von Wickelkern und Bandwickel erhalten bleibt.

Damit lassen sich erfahrungsgemäp alle beim Massenprodukt Kompaktkassette auftretenden und sich im Extremfall ungünstig addierenden Toleranzen der verschiedenen, zusammenwirkenden Kassettenteile ausreichend berücksichtigen.

Einzelheiten der vorliegenden Erfindung sind anhand von in den Zeichnungen dargestellten Ausführungsbeispielen beschrieben.

Es zeigen

| | |
|---|---|
| Figur 1 | eine erfindungsgemäpe Kassette in Explosionsdarstellung |
| Figur 2 | eine Teil-Schnittdarstellung einer Kassette gemäß Figur 1 mit erfindungsgemäßen Knick-Folienbereichen |
| Figur 3 | eine weitere Teil-Schnittdarstellung mit einer Kassette gemäß Figur 1 mit erfindungsgemäßen Kreispräge-Folienbereichen |
| Figur 4a bis 4g | verschiedene schematische Folienausführungen und Querschnittsbeispiele von Knick- und Prägefolienbereichen |
| Figur 5 | eine Folie mit Quer-Knick- oder Prägefolienkanten |
| Figur 6 | eine Folie mit am Wickelkernumfang endenden Teilprägefolienkanten |
| Figur 7 | Drehmoment- und Wow und Flutter-Vergleichsmeßkurven mit einer Kassette nach dem Stand der Technik |
| Figur 8 | die Folienausführung aus Figur 2 in Paardarstellung, im Mittelquerschnitt |

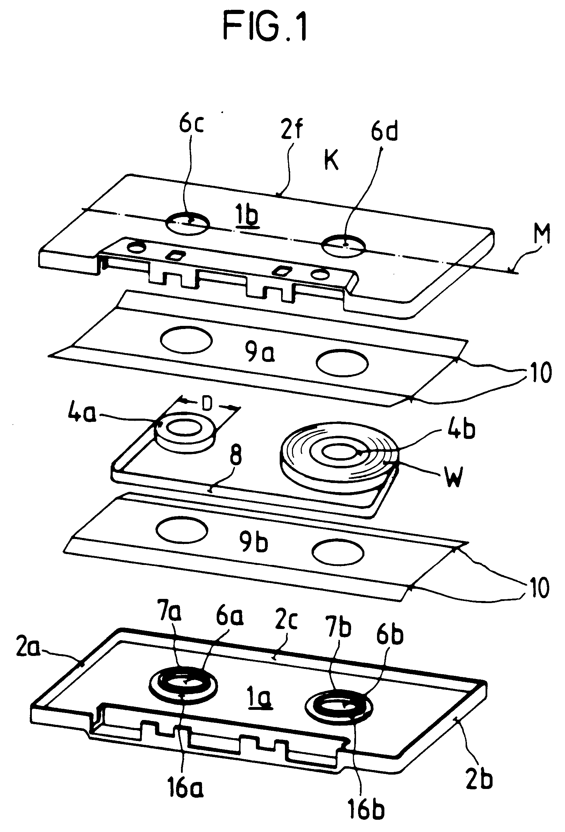

Figur 1 zeigt eine Kompaktkassette K mit einem Gehäuse G, bestehend aus zwei rechteckigen Boden- und Deckelwänden 1a und 1b und Seitenwänden 2a, 2b und 2c bzw. 2d, 2e und 2f, die zusammengebaut einen im wesentlichen quaderförmigen Hohlraum 3 zur Aufnahme der zwei Wickelkerne 4a und 4b bilden, die um senkrecht zu den Hauptwänden 1a, 1b liegende Achsen 5 und koaxial dazu liegende Öffnungen 6a bzw. 6c und 6b bzw. 6d diese umgebende nach innen gerichtete Lagerränder 7a bzw. 7c und 7b bzw. 7d drehbar gelagert sind. Zwischen den Wickelkernen 4a und 4b ist ein Magnetband 8 wickelbar, wobei es an beiden Wickelkernen 4a und 4b mit seinen Enden befestigt ist und der in der Zeichnung auf dem Wickelkern 4b befindliche Bandwickel W ganz oder teilweise auf den Wickelkern 4a aufwickelbar ist und dann der Wickelvorgang umgekehrt ablaufen kann.

An der Innenseite jeder der Boden- und Deckelwände 1a und 1b liegt eine Gleitfolie 9a bzw. 9b derartig an, daß durch längsverlaufende, schmale, parallele, gebogene oder geknickte Folienbereiche 10 federnd gegen die Stirnseiten der Wickelkerne 4a und 4b, gegen den Bandwickel W sowie gegen das Magnetband 8 selbst drücken.

Um jeden Lagerrand 7a bis 7d des Gehäuses G ist erfindungsgemäß ein zusätzlicher Ringrand 16 vorgesehen, von denen Ringränder 16a und 16b in Figur 1 dargestellt sind.

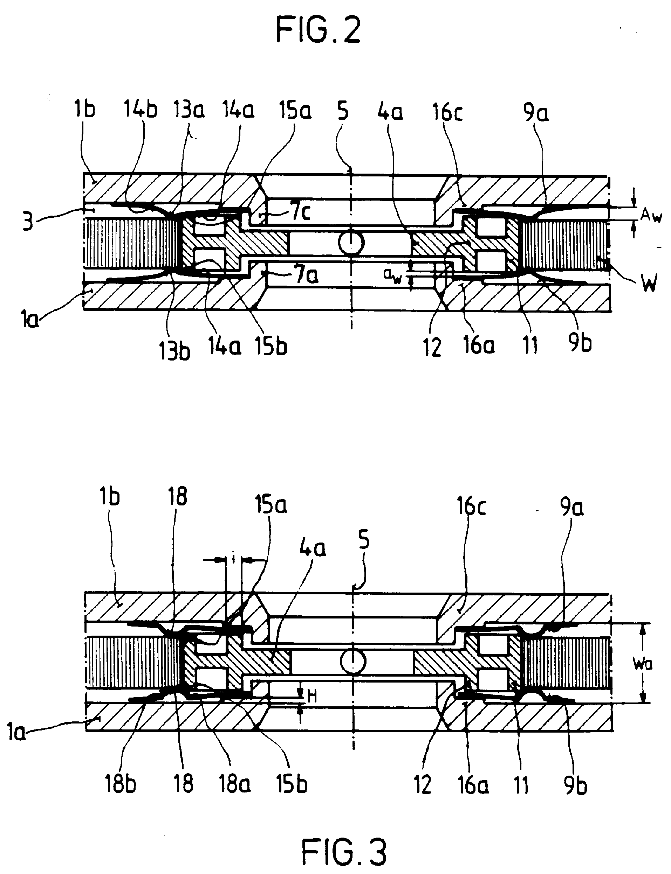

In Figuren 2 und 3 sind Schnittdarstellungen der Wickelkerne 4a und 4b gezeigt, worin jeder Wickelkern 4 einen äußeren Ring 11 und einen inneren Ring 12 aufweist, deren axiale Abmessungen im wesentlichen gleich und geringfügig breiter (um 0,05 bis 0,3 mm) als das Magnetband 8 sind.

Jede der Gleitfolien 9a und 9b reicht mit ihren Kreisöffnungen bis etwa an die Lagerränder 7a und 7b heran, so daß sie am Innenrand auf dem Ringrand 16a bzw. 16b am Gehäuse G aufliegt.

Die parallelen, schmalen Folienbereiche 10 sind hier als Parallelknicke 13a und 13b ausgebildet deren Abstand zur Kassettenmittenachse M gleichbleibend so gewählt ist, daß die mit dem Band 8, und/oder den Wickelkernen 4a, 4b und/oder den Bandwickeln W in Führungskontakt stehenden Parallelknicke 13 gerade außerhalb des Außendurchmessers D des äußeren Rings 11 des Wickelkerns 4 liegt, so daß die nach innen gerichtete Anlaufschräge 14a mit den äußeren oberen oder unteren Ringkanten 15a bzw. 15b des leeren Wickelkerns 4 in Linienkontakt steht, während die nach außen gerichtete Anlaufschräge 14b den ankommenden, aufzuwickelnden Bandwindungen zugewandt ist und für deren Ausrichtung und Führung zum Wickelkern sorgt.

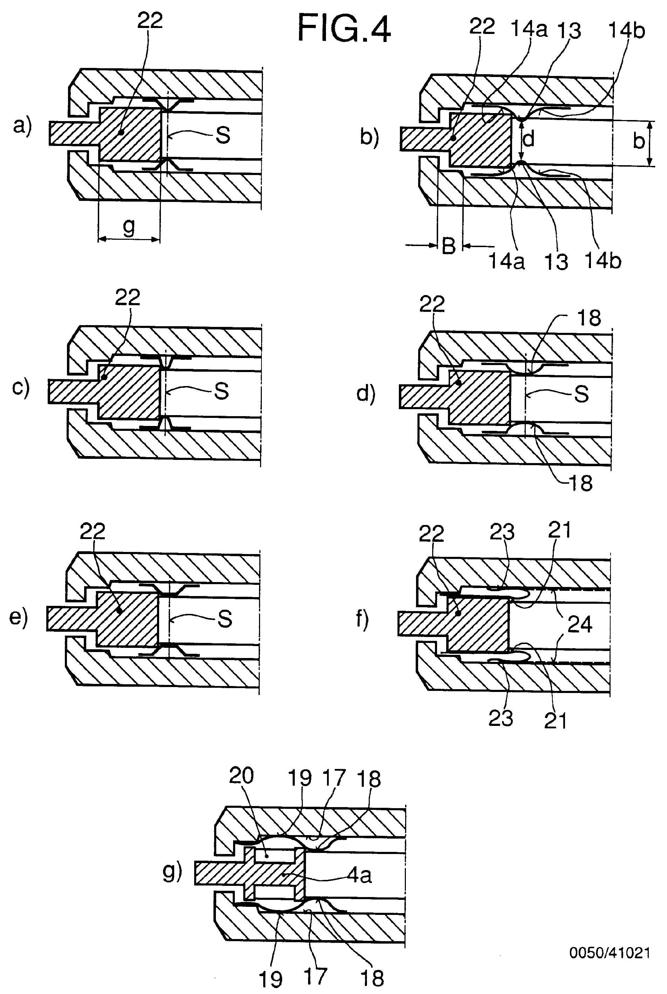

Der kleinste Abstand d der Knicke 13 in unmittelbarer Nähe des zugehörigen Wickelkerns 22 (s. Figur 4b) entspricht im wesentlichen der Breite b des Bandes 8 oder ist geringfügig kleiner (d$\leq$b), wie in Figur 4b gestrichelt angedeutet ist.

Dadurch, daß hier die Gleitfolien 9a, 9b im Bereich der inneren Ringe 12 des Wickelkerns 4a bzw. 4b auf den vorzugsweise ringförmigen, um die Lagerränder 7 herum angeordneten Ringrändern 16 am Gehäuse G aufliegen, wird die Führungswirkung der Knicke 13 und der anschließenden, in der Zeichnung nicht in Einzelheiten dargestellten, anderen, eventuell noch führenden Folienbereiche noch verstärkt. Damit wird vorteilhaft erreicht, daß in Umfangsnähe des Wickelkerns 4a, 4b die Führungswirkung, insbesondere auf Band 8 und Bandwickel W, erhöht wird, wobei gleichzeitig einem Kippen, Taumeln der Wickelkerne durch innere und äußere Einwirkungen ebenfalls von vornherein entgegengewirkt wird, ohne daß der Wickelraum für den Bandwickel W unzulässig eingeengt würde.

Die Innenflächen der Boden- und Deckelwände 1a und 1b sind mit 17a bzw. 17b bezeichnet. Die obenerwähnten, außerdem noch führenden Folienbereiche, die sich an die gerade noch dargestellten Enden der Folien 9a und 9b (Figur 2, 3) anschließen, sind in irgendeiner Form an den besagten Innenflächen 17a und b, der Gehäusewände abgestützt, um noch eine zusätzliche Führungswirkung auf Bandwickel W und den auf dessen Umfang auflaufenden bzw. von dessen Umfang ablaufenden Bandabschnitt ausüben zu können.

Figur 3 zeigt eine weitere Ausführung von Folien 9a bzw. 9b mit Parallelprägungen 18, die eine Kreisabschnittsform im Querschnitt besitzen und die mit den Parallelknicken 13 entsprechenden Anlauf-, Ausricht- und Führungs-Abschnitten 18a bzw. 18b ausgebildet sind. Die Kreisquerschnittsform der Prägungen 18 kann ohne weiteres durch eine gleichwirkende Kurvenform, etwa eine Parabelform (s. Figur 4c) oder Sinusform (s. Figur 4g) ersetzt werden, bei gleichen Funktionen und Vorteilen (vgl. Darstellungen in Figur 4a bis 4g). Ebenso läßt sich der Dreiecksquerschnitt der Parallelknicke 13 (s. Figuren 4a und 4b) durch einen Trapezquerschitt (s. Figur 4e) oder ähnlich und gleichwirkend ersetzen. In Figur 4f ist ein Anlauffolienbereich 21 mit nach hinten bzw. in den Durchmesserbereich D des Wickelkerns 22 zurückgeklappten und in diesem Bereich an der Innenfläche 17 abgestützten Folienende 23 dargestellt. Gestrichelt ist angedeutet, daß in diesem Fall beidseitig des Bandwickels je eine weitere federnde Folie 24 zusätzlich verwandt werden kann.

Die Herstellung aller Knicke, Prägungen, Falten, Sicken usw., die im Sinne der vorliegenden Erfindung verwendet werden können, läßt sich bekannterweise durch geeignetes Kalt- und Warmverformen je nach Folienmaterial realisieren.

Figur 4g zeigt Folien mit Prägungen 18, die jedoch zusätzlich noch im Durchmesserbereich D des Wickelkerns 4a, vorzugsweise im Bereich der Ringnut 20 angeordnete, an der Innenfläche 17 abgestützte Kreis- oder Kurvenprägungen 19 aufweisen.

Die Gesamtform kann etwa eine Sinusform sein oder zwei gegeneinander abgesetzte Kreisabschnittsformen. In beiden Fällen erhält der Wickelkern 4a durch die zusätzliche Prägung 19 mehr Stabilitt und eine härtere Federcharakteristik, je nachdem, welches Folienmaterial verwendet wird.

Beispielsweise wird im folgenden die Dimensionierung der Einzelteile angegeben, bezogen auf eine Kompakt-Kassette nach DIN 45 516 (Juni 1976):

Breite b des Magnetbandes 8       $b = 3,81$ mm

axiale Breite der Wickelkerne 4, 22    $h = 3,9–4,1$ mm

($\emptyset$ 4,0 mm)

axiale Höhe des Kassettenhohlraums 3   $W_a = 5,0–5,2$ mm

($\emptyset$ 5,1 m)

Dicke der Gleitfolie 9       $n = 0,050$ mm

axiale Höhe des Ringrandes 1b     $H = 0,2–0,4$ mm

(0,25–0,3 mm)

Die Breite B des Ringrandes 1b ist in den dargestellten Ausführungen breiter als die Breite des inneren Ringteils 12, also etwa 1,5 bis 3 mm, sie muß jedoch immer kleiner als die Ringbreite g (s. Figur 4a) des Wickelkerns 12 bzw. 4 ausgelegt werden.

Danach liegt das axiale Spiel des Wickelkerns 4 zwischen den zwei Folien 9 plus der zwei Ringränder 16 im Bereich eines Faktors von etwa 0,3 bis etwa 0,7, vorzugsweise etwa bei der Hälfte (Faktor 0,5) im Vergleich zum axialen Spiel des Wickelkerns zwischen den Gehäuseinnenflächen 17 plus der zwei Gleitfolien.

Dabei ist zu beachten, daß die obere Grenze von 0,8 schon davon bestimmt wird, ob ein Verklemmen des Wickelkerns 4 eintritt oder gerade noch nicht.

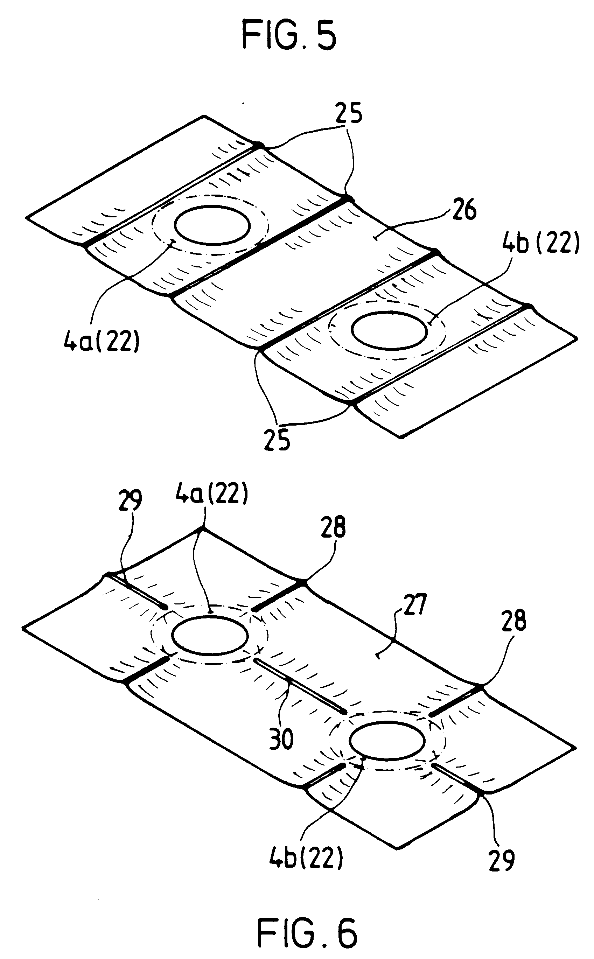

In Figur 5 sind bei einer weiteren Folie 26 die Längs-Parallelknicke 10, 13, 18 durch jeweils zwei Querknicke 25 für jeden hier angedeuteten Wickelkern 4 oder 22 ersetzt worden.

Figur 6 zeigt eine Ausführung einer Folie 27 mit kurzen oder nicht durchgehenden Teilprägungen 28 bis 30, die jeweils am Folienrand beginnen, jedoch am äußeren Durchmesserbereich der Wickelkerne 4a, 4b und 22 enden. Der Anlaufabschnitt für den Wickelkern ist dabei das jeweilige Ende der Teilprägungen 27 bis 29.

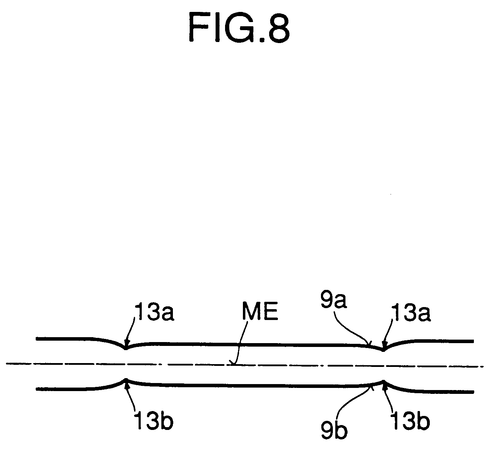

Figur 8 zeigt die Querschnittsdarstellung eines Folienpaares in Einbaulage und der Bezugs-Mittelebene ME, die in einer Bandkassette die Mittelebene des Kasstteninnenraums bzw. der Mittellage der Bandwickel darstellt.

Der beschriebenen Erfindung liegt die Erfahrung zugrunde, daß die Wickelkerne und das Gehäuse bei den unterschiedlichen Betriebszuständen, z.B. durch Ausbildung von elektrostatischen Ladungen in der Kassette oder bei höheren Temperaturen - z.B. im sommerlichen Autobetrieb - weist weniger geometrische Veränderungen erfährt (z.B. durch Schwund oder Verzug), als es z.B. beim Magnetband oder beim Bandwickel durch stufenlose Lagen oder lose Bereiche (von Bandwindungen), verzogene Wickel, Wickelkernversatz durch Schwund und Verzug oder durch verschlechterte Führungseigenschaften der Gleitfolie der Fall ist. Deshalb ist es ohne Probleme möglich, das axiale Spiel der Wickelkerne im Gehäuse durch die erfindungsgemäßen Ringränder 16 einzuengen, wenn der Bandwickel im übrigen Kassettenhohlraum 3 noch genügend Raum für den Fall solcher Störungen erhält. Die erfindungsgemäßen Gleitfolien, die den Bandwickel in diesem Hohlraum führen und abstützen, können, wie oben bereits angedeutet, in diesen Bereichen verschieden geformt sein, wie es aus dem Stand der Technik mannigfach bekannt ist.

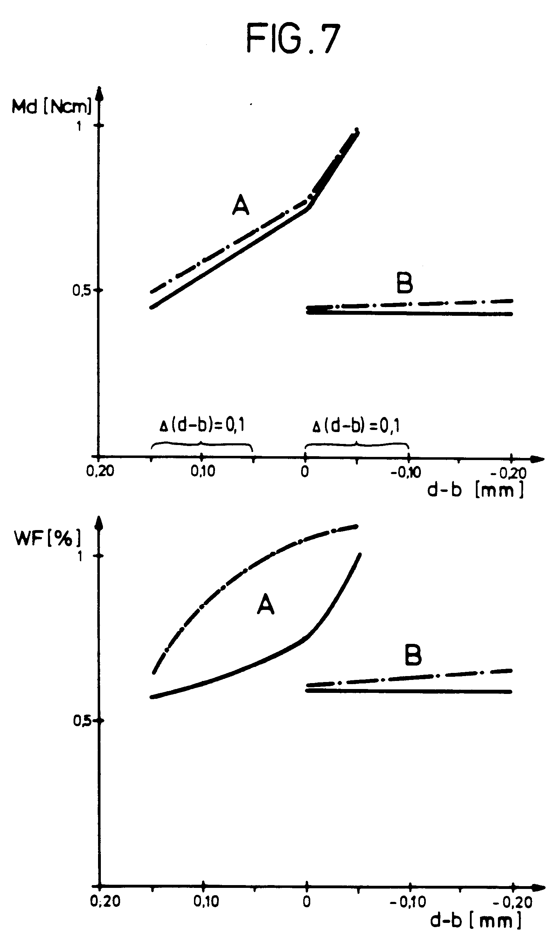

Aufgrund des vorteilhaften Angriffs der erfindungsgemäßen Knicke und Prägungen jeweils an den Ringkanten 15a, b der Wickelkerne 4, kann der durch die Bandklammer im Stand der Technik hervorgerufene gravierende Nachteil einer bei jeder Drehung auftretenden Störung weitgehend eliminiert werden, so daß selbst hervorstehende Bandklammern keine Wirkung mehr zeigen (vgl. Kurven in Figur 7).

Zum Vergleich der Erfindung mit dem Stand der Technik wird eine Compact Cassette (CC) der Fa. Sony, Japan, vom Typ UCX-S 90 mit einer Compact-Cassette vom Typ ChromMaxima® II der BASF AG, unter sonst gleichen Meßbedingungen verglichen. Die CC der Fa. Sony entspricht der in der DE-PS 28 25 457 beschriebenen Kassette, wobei die Längsprägungen der Folien praktisch eine Höhe h der Prägung von h = 0,3 mm und eine Breite (Abstand der Knickkanten) von etwa 2,6 mm aufwiesen, so daß die flachen Folien relativ lose zwischen Gehäuseinnenflächen und Bandwickel angeordnet waren, wobei die Prägungen jedoch eine harte Federcharakteristik besaßen. Der in der DE-PS 28 25 457 angegebene Höhenbereich der Prägungen h von 0,28 bis 0,53 mm wird durch Unterlegen von Folienstreifen im Mittelbereich der Kassette nachgestellt, ebenso wie in der BASF CC, in der die nach unten und nach oben weisenden gebogenen oder geknickten Folienbereiche eine Gesamthöhe von 0,8 mm aufwiesen, also federnd abstützend auf Wickelkern und Bandwickel wirkten. Die Folienstärken waren in beiden CC's dieselbe.

In beiden Fällen der Drehmomentmessung und der Wow- und Flutter-Messung wurde die Differenz der theoretischen Abstandes d (zwischen Prägungen bzw. Knickkanten, (vgl. Figur 4b)) und der Bandbreite b als

® ist eingetragenes Warenzeichen der BASF AG, Ludwigshafen

Abszisse zugrundegelegt und variiert. Der Wert 0 (Null) besagt also, daß d=b ist, daß also kein Freiraum zwischen Bandwickel und Gehäuseinnenfläche mehr vorhanden war.

Beschreibung der Messungen.

Bei der Drehmomentmessung wird das Aufwickeldrehmoment beim Umspulen einer CC gemessen, ohne Kontakt des Magnetkopfes mit dem Band. Der Aufwickeldorn wird mit konstantem Moment von 0,08 Ncm gebremst. Die Aufwickelseite hat einen annähernd vollen und die Abwickelseite einen annähernd leeren Wickel. Die Mepwerterfassung erfolgt kurz vor dem Ende des Banddurchlaufs. Die Lage der CC ist waagerecht während der Messung. Die Drehzahl des Aufwickeldorns ist 500 Upm. Die Meßvorrichtung ist ein Drehmoment-Meßgerät (Eigenbau der BASF AG, Ludwigshafen) und basiert auf der Messung der Stromerhöhung des Aufwickelmotors.

Die Wow- und Flutter-Messung ist eine Messung der Tonhöhenschwankung einer CC bei Wiedergabe eines aufgezeichneten Meßsignals der Frequenz 3150 Hz auf zwei verschiedenen handelsüblichen Single-Capstan-Recordern mit je 2 Magnetköpfen. Das Wow- und Flutter-Meter der Fa. Woelke, 8069 Schweitenkirchen, mißt die auftretenden Frequenzschwankungen unbewertet mit einer Demodulatorbandbreite von 1000 Hz. Von einer Vielzahl von Messungen werden die zehn größten Differenzwerte verwendet und mittels Rechners HP 85 B (der Fa. Hewlett & Packard) der Mittelwert gerechnet. Alle Meßwerte werden in einer Häufigkeitsverteilung dargestellt und über die gesamte Bandlänge aufgeschrieben.

Die Kurven A sind die Meßkurven der CC UCX-S 90 (Sony) und die Kurven B die der BASF CC gemäß der Erfindung.

Die durchgezogenen Kurven zeigen die Meßwerte der bezüglich Bandklammer unveränderten CC, die gestrichelten dagegen einen vorgenommenen Bandklammerversatz gegenüber der Ebene des Wickelkerns von 0,1 mm.

Meßergebnisse der CC A (Sony)

| Δ (d-b) [mm] | 0,1 | 0,15 | 0,20 | |
|---|---|---|---|---|
| Md [Ncm] | 0,20 (44 %) | 0,29 (64 %) | 0,45 (100 %) | oKV |
| | 0,20 (40 %) | 0,28 (56 %) | 0,4 (80 %) | mKV |
| W+F [%] | 0,085 (11,4 %) | 0,175 (30,4 %) | 0,425 (73,9 %) | oKV |
| | 0,33 (51,5 %) | 0,40 (62,5 %) | 0,44 (68,8 %) | mKV |

oKV = ohne Klammerversatz
mKV = mit Klammerversatz

(Die Prozentangaben beziehen sich auch in der folgenden Tabelle jeweils auf den Anfangswert:
bei A auf den jeweiligen Wert bei d-b = 0,15
bei B auf den jeweiligen Wert bei d-b = 0)

Als Ergebnis ist festzuhalten, daß die Drehmomenterhöhung schon ohne Klammerversatz von 44 % auf 100 % anwächst. Die Erhöhung der Wow- und Flutter-Störungen beträgt ohne Klammerversatz ca. 11 % bis ca. 74 % und mit Klammerversatz 51,5 bis ca. 69 %.

Die CC nach dem Stand der Technik ist also rein von der Mechanik nicht für alle auf dem Markt befindlichen Recorder zum störungsfreien Betrieb geeignet und verschlechtert die elektroakustische Wiedergabe um die Hälfte bis zu zwei Dritteln, falls die Bandklammer nur um 0,1 mm hervorsteht, was produktionstechnisch häufiger vorkommt.

Meßergebnisse der CC B (BASF)

| $\Delta$ (d-b) [mm] | 0, 1 | 0, 15 | 0, 20 | |
|---|---|---|---|---|
| Md [Ncm] | 0 | 0 | 0,01 | okV |
| | 0,03 (6,7 %) | 0,035 (7,7 %) | 0,04 (8,9 %) | mkV |
| W+F [%] | 0 | 0 | 0 | okV |
| | 0,025 (4,2 %) | 0,0375 (6,25 %) | 0,04 (6,7 %) | mkV |

oKV = ohne Klammerversatz

mKV = mit Klammerversatz

Hierzu wird festgestellt, daß trotz erheblicher Einengung der Federwege der Gleitfolien im Drehmoment eine nur geringe Zunahme unter 9 % aufritt selbst bei Bandklammerversatz. Diese Toleranz wird von den meisten Recordern ohne weiteres verkraftet, so daß mechanisch bedingte Störungen beim Betrieb der CC auf den Geräten nicht auftreten.

Hinsichtlich Wow- und Flutter-Störungen liegen diese selbst bei Bandklammerversatz deutlich unter 7 %, was in Anbetracht der erschwerten Bedingungen: Einengung des Federweges plus Bandklammerversatz die große Zuverlässigkeit dieser erfindungsgemäßen Gleitfolienausführungen bestätigt.

Eine Bandkassette ist mit einem Folienpaar mit gebogenen bzw. geknickten Folienbereichen ausgebildet, die im wesentlichen auf den äußeren Umfang des mindestens einen Wickelkerns und auf die ersten ankommenden Bandwindungen wirken. Im Bereich des inneren Durchmessers kann jede Folie daher flach ausgebildet sein, da die gröpere Hebelwirkung am Außenumfang eine Zentrierung und Stabilisierung der Drehung ermöglicht. Eine Einengung der Gehäuse-Lagerung am Innendurchmesser macht die Zentrier- und Gleiteigenschaften dort unabhängig von einer Veränderung einer Folien-Biege- oder Knickform. Geeignet sind Folien und Bandkassetten damit für jede Art von Folien- und Magnetbandkassetten.

## Patentansprüche

1. Bandkassette, insbesondere Magnetbandkassette, mit mindestens einem Bandwickel auf einem im wesentlichen flanschlosen Wickelkern (4), auf den und/oder von dem ein Band (8) auf- bzw. abwickelbar ist in einem Kassettengehäuse (G), wobei zwischen dem Bandwindungen aufweisenden Bandwickel (W) und den Boden- und Deckelwänden der Kassette Folien (9) mit gebogenen oder geknickten, einander zugeordneten und in Bezug auf die Kassettenmittelebene einander gegenüberliegenden Folienbereichen (10) vorgesehen sind, die zumindest zeitweise mit den Wickelkernen (4, 22), den Bandwickeln (W) und dem Band (8) in Kontakt treten können, und die Anlaufabschnitte (14b, 18b) umfassen, die jede der aufzuwickelnden Bandwindungen zum Wickelkern neu ausrichten und führen, und wobei zwischen Wickelkernen (4, 22) und Kassettengehäuse (G) eine axiale Lagereinengung vorgesehen ist, und die Folien (9) über die Lagereinengung reichen, dadurch gekennzeichnet, daß die Lagereinengung als im Bereich des Durchmesserbereichs (D) des Wickelkerns (4, 22) liegende Ringränder (16a, 16b) am Kassettengehäuse (G) ausgebildet ist und die gebogenen oder geknickten Folienbereiche (10, 13, 18, 21, 25, 28, 29, 30) über die Ringränder (16a,16b) des Kassettengehäuses (G) greifende Anlaufflanken (14a, 18a) und mit den Bandwindungen zusammenwirkende Anlaufabschnittte (14b, 18b) aufweisen, wovon die Anlaufflanken (14a, 18a) dem jeweiligen-Wickelkern (4, 22) zugewandt sind und wenigstens mit Teilen der oberen und unteren äußeren Ringkanten (15a und 15b) des Wickelkerns zur Führung des leeren Wickelkerns (4, 22) zusammenwirken.

2. Kassette nach Anspruch 1, dadurch gekennzeichnet, daß die gebogenen oder geknickten Folienbereiche Prägungen oder Knicke in Längsrichtung (M) der Kassette (K) sind.

3. Kassette nach Anspruch 1, dadurch gekennzeichnet, daß die gebogenen oder geknickten Folienbereiche Prägungen oder Knicke (25) in Querrichtung der Kassette (K) sind (Fig. 5).

4. Kassette nach Anspruch 1, dadurch gekennzeichnet, daß die gebogenen oder geknickten Folienbereiche in Draufsicht Ringformprägungen über und unter den Bandwickeln (4, 22) sind.

5. Kassette nach Anspruch 1, dadurch gekennzeichnet, daß die Anlaufflanken (14a, 18a) als Anlaufschrägen ausgebildet sind.

6. Kassette nach einem oder mehreren der Ansprüche 1 bis 5, dadurch gekennzeichnet, daß die Querschnittsform der Prägungen oder Knicke eine Dreiecks-, Trapez-, Kreisabschnitts- oder Bogenform ist (Fig. 4a bis g).

7. Kassette nach Anspruch 5 oder 6, dadurch gekennzeichnet, daß die Querschnittsform der Prägungen oder Knicke etwa symmetrisch ist (Fig. 4a bis e) und die Symmetrielinie (S) vom Mittelpunkt des Wickelkerns einen Abstand aufweist, der größer als der Radius (D/2) des Wickelkerns (4, 22) ist.

8. Kassette nach einem der Ansprüche 2 bis 7, dadurch gekennzeichnet, daß die einander zugeordneten und einander gegenüberliegenden gebogenen oder geknickten Folienbereiche einen Abstand (d) voneinander aufweisen, der in etwa einer Bandbreite (b) entspricht.

9. Kassette nach Anspruch 1 und einem oder mehreren der Ansprüche 2 bis 8, dadurch gekennzeichnet, daß die aufliegenden Folien (9) auf den Ringrändern (16) die Höhe (H) und Breite (B) der Ringränder (16) und die Ausbildung und Anordnung der gebogenen bzw. geknickten Folienbereiche so gewählt ist, daß bei vollem Bandwickel (W) im Bereich des Wickelkerndurchmessers (D) die Folie (9) nicht an der Innenseite (17) der Kassettenwand zur Anlage kommt (Figr. 2 und 3).

10. Kassette nach Anspruch 9 und einem oder mehreren Ansprüche 2 bis 8, dadurch gekennzeichnet, daß das axiale Spiel (2 x $a_w$) zwischen Wickelkern (4, 22) und Ringrändern (16) am Gehäuse (G) im Vergleich zum axialen Spiel (2 x $A_w$) zwischen Bandwickel (4, 22) und Gehäuseinnenflächen (17) im Bereich eines Faktors von etwa 0,3 bis 0,7, vorzugsweise bei einem Faktor von etwa 0,5 liegt.

11. Kassette nach Anspruch 1 und einem oder mehreren der Ansprüche 2 bis 10, dadurch gekennzeichnet, daß zusätzlich zu den gebogenen oder geknickten Folienbereichen (13, 18), die außerhalb des Durchmessers (D) des Wickelkerns (4a, 4b) liegen, weitere, innerhalb des Durchmessers (D) angeordnete gebogene oder geknickte Folienbereiche (19) vorgesehen sind, die zur Innenfläche (17) des Gehäuses (G) gerichtet sind.

12. Kassette nach Anspruch 11, dadurch gekennzeichnet, daß die Querschnittsformen der Folienbereiche (13 und 19 bzw. 18 und 19) innerhalb und außerhalb des Durchmessers des Wickelkerns zusammen etwa eine Sinusform oder zwei nebeneinanderliegende Kreisabschnittsformen (Fig. 4g) sind.

13. Kassette nach einem oder mehreren der Ansprüche 1 bis 12, dadurch gekennzeichnet, daß die Breite (B) der Ringränder (16) wesentlich kleiner als die Ringbreite (g) des Wickelkerns (22, Fig. 4a) ist.

## Claims

1. A tape cassette, in particular a magnetic tape cassette, having one or more tape rolls (W) on an essentially flangeless hub (4), onto which and/or from which a tape (8) can be wound or unwound in a cassette housing (G), support liners (9) having curved or bent liner regions (10) which are coordinated with one another, are located opposite to one another with respect to the cassette central plane and can come into contact with the hubs (4, 22), the tape rolls (W) and the tape (8) temporarily or permanently and which comprise run-on sections (14b, 18b) which realign with and guide to the hub each of the tape windings to be moved being provided between the tape roll (W) having tape windings and the bottom and lid walls of the cassette, and an axial bearing constriction being provided between the hubs (4, 22) and the cassette housing (G), and the support liners (9) extending over the bearing constriction, wherein the bearing constriction is formed, on the cassette housing (G), as annular edges (16a, 16b) located in the region of the diameter (D) of the hub (4, 22), and the curved or bent liner regions (10, 13, 18, 21, 25, 28, 29, 30) have run-on flanks (14a, 18a) which engage to the annular edges of the cassette housing and run-on sections (14b, 18b) which interact with the tape windings, of which the run-on flanks (14a, 18a) face the particular hub (4,22) and interact at least with parts of the upper and lower outer annular edges (15a, 15b) of the hub in order to guide the empty hub.

2. A cassette as claimed in claim 1, wherein the curved or bent liner regions are embossings or bends in the longitudinal direction (M) of the cassette (K).

3. A cassette as claimed in claim 1, wherein the curved or bent liner regions are embossings or bends (25) in the transverse direction of the cassette (K) (Fig. 5).

4. A cassette as claimed in claim 1, wherein the curved or bent liner regions in plan view are annular embossings above and below the tape rolls (4, 22).

5. A cassette as claimed in claim 1, wherein the run-on flanks (14a, 18a) are formed as inclined guide surfaces.

6. A cassette as claimed in one or more of claims 1 to 5, wherein the cross-sectional shape of the embossings or bends is a triangular, trapezoidal, circular segment or arc shape (Fig. 4a to g).

7. A cassette as claimed in claim 5 or 6, wherein the cross-sectional shape of the embossings or bends is roughly symmetrical (Fig. 4a to e) and the distance from the midpoint of the hub to the symmetry line (S) is greater than the radius (D/2) of the hub (4, 22).

8. A cassette as claimed in any one of claims 2 to 7, wherein the curved or bent support liner regions coordinated with one another and opposite one another are separated by a distance (d) which corresponds roughly to a tape width (b).

9. A cassette as claimed in claim 1 and one or more of claims 2 to 8, wherein the support liners (9) resting on the annular edges (16), the height (H) and width (B) of the annular edges (16) and the form and arrangement of the curved or bent liner regions are chosen so that, with a full tape roll (W), the support liner (9) does not rest against the inside (17) of the cassette wall in the region of the hub diameter (D) (Fig. 2 and 3).

10. A cassette as claimed in claim 9 and one or more of claims 2 to 8, wherein the axial play (2 x $a_w$) between the hub (4, 22) and the annular edges (16) on the housing (G) is about 0.3-0.7, preferably about 0.5, times the axial play (2 x $A_w$) between the hub (4, 22) and the inner surfaces (17) of the housing.

11. A cassette as claimed in claim 1 and one or more of claims 2 to 10, wherein liner regions (19) which are curved or bent and arranged inside the diameter (D) and are oriented toward the inner surface (17) of the housing (G) are provided in addition to the curved or bent liner regions (13, 18) which lie outside the diameter (D) of the hub (4a, 4b).

12. A cassette as claimed in claim 11, wherein the cross-sectional shapes of the liner regions (13 and 19 or 18 and 19) inside and outside the diameter of the hub together are roughly a sinusoidal shape or two adjacent circular segment shapes (Fig. 4g).

13. A cassette as claimed in one or more of claims 1 to 12, wherein the width (B) of the annular edges (16) is substantially smaller than the ring width (g) of the hub (22, Fig. 4a).

## Revendications

1. Cassette de bande, en particulier cassette de bande magnétique, comportant au moins un enroulement de bande sur un noyau essentiellement sans flasques (4) sur lequel une bande (8) peut être enroulée et/ou duquel celle-ci peut être déroulée, dans un boîtier (G), entre l'enroulement de bande (W) présentant des spires et les parois de fond et de couvercle de la cassette étant prévues des feuilles (9) ayant des zones cintrées ou pliées (10) se correspondant et opposées par rapport au plan médian de la cassette qui peuvent venir en contact au moins par moments avec les noyaux d'enroulement (4, 22), les enroulements de bande (W) et la bande (8), et qui comprennent des parties d'accostage (14b, 18b) qui réorientent et guident vers le noyau d'enroulement chacune des spires de bande à enrouler, et entre les noyaux d'enroulement (4, 22) et le boîtier (G) de la cassette étant prévu un rétrécissement axial d'appui, et les feuilles (9) allant dans ce rétrécissement d'appui, caractérisée par le fait que le rétrécissement d'appui est constitué de bords annulaires (16a, 16b) situés dans la zone du diamètre (D) du noyau d'enroulement (4, 22) faits sur le boîtier (G) de la cassette, et les zones cintrées ou pliées (10, 13, 18, 21, 25, 28, 29, 30) des feuilles présentent des flancs d'accostage (14a, 18a) s'engageant dans les bords annulaires du boîtier de la cassette et des parties d'accostage (14b, 18b) coopérant avec les spires de bande, les flancs d'accostage (14a, 18a) étant dirigés vers le noyau d'enroulement (4, 22) associé et coopérant avec au moins des parties des bords annulaires extérieurs supérieur et inférieur (15a et 15b) du noyau d'enroulement pour le guidage du noyau d'enroulement (4, 22) vide.

2. Cassette selon la revendication 1, caractérisée par le fait que les zones cintrées ou pliées des feuilles sont des empreintes ou des pliures s'étendant dans la direction longitudinale (M) de la cassette (K).

3. Cassette selon la revendication 1, caractérisée par le fait que les zones cintrées ou pliées des feuilles sont des empreintes ou des pliures (25) s'étendant dans la direction transversale de la cassette (K) (figure 5).

4. Cassette selon la revendication 1, caractérisée par le fait que les zones cintrées ou pliées des feuilles, vues de dessus, sont des empreintes de forme annulaire situées au-dessus et au-dessous des enroulements de bande (4, 22).

5. Cassette selon la revendication 1, caractérisée par le fait que les flancs d'accostage (14a, 18a) sont inclinés.

6. Cassette selon une ou plusieurs des revendications 1 à 5, caractérisée par le fait que la section transversale des empreintes ou des pliures est triangulaire, trapézoïdale, en forme de segment de cercle ou arquée (figures 4a à 4g).

7. Cassette selon l'une des revendications 5 et 6, caractérisée par le fait que la section transversale des empreintes ou des pliures est à peu près symétrique (figures 4a à 4e) et son axe de symétrie (S) est à une distance du centre du noyau d'enroulement (4, 22) supérieure au rayon (D/2) de celui-ci.

8. Cassette selon l'une des revendications 2 à 7, caractérisée par le fait que les zones cintrées ou pliées des feuilles se correspondant et se faisant face sont à une distance (d) l'une de l'autre qui correspond à peu près à une largeur de bande (b).

9. Cassette selon la revendication 1 et une ou plusieurs des revendications 2 à 8, caractérisée par le fait que les feuilles (9) reposant sur les bords annulaires (16), la hauteur (H) et la largeur (B) des bords annulaires (16) et la forme et la disposition des zones cintrées ou pliées des feuilles sont choisies de façon que lorsque l'enroulement de bande (W) est plein, la feuille (9), dans la zone du diamètre (D) du noyau d'enroulement, ne vienne pas s'appuyer sur la face intérieure (17) de la paroi de la cassette (figures 2 et 3).

10. Cassette selon la revendication 9 et une ou plusieurs des revendications 2 à 8, caractérisée par le fait que le rapport du jeu axial (2 x $a_w$) entre le noyau d'enroulement (4, 22) et les bords annulaires (16) du boîtier (G) au jeu axial (2 x Aw) entre l'enroulement de bande (4, 22) et les faces intérieures (17) du boîtier est d'environ 0,3 à 0,7, de préférence d'environ 0,5.

11. Cassette selon la revendication 1 et une ou plusieurs des revendications 2 à 10, caractérisée par le fait qu'en plus des zones cintrées ou pliées (13, 18) des feuilles situées à l'extérieur du diamètre (D) du noyau d'enroulement (4a, 4b) sont prévues d'autres zones cintrées ou pliées (19) des feuilles placées à l'intérieur du diamètre (D) qui sont dirigées vers la face intérieure (17) du boîtier (G).

12. Cassette selon la revendication 11, caractérisée par le fait que les formes de la section transversale des zones (13 et 19 ou 18 et 19) des feuilles situées à l'intérieur et à l'extérieur du diamètre du noyau d'enroulement ont, ensemble, à peu près une forme sinusoïdale ou deux formes en segment de cercle juxtaposées (figure 4g).

13. Cassette selon une ou plusieurs des revendications 1 à 12, caractérisée par le fait que la largeur (B) des bords annulaires (16) est nettement inférieure à la largeur (g) de l'anneau du noyau d'enroulement (22, figure 4a).

# FIG.1

# FIG.2

# FIG.3

# FIG.4

# FIG. 5

# FIG. 6

# FIG.7

# FIG.8